# EUROPEAN PATENT APPLICATION

(11) **EP 3 626 384 A1**
(43) Date of publication of application: **25.03.2020**
(21) Application number: 19196868.4
(22) Date of filing: 19.12.2017
(51) Int. Cl.: B23K 26/146

(54) **LASER PROCESSING APPARATUS**

(30) Priority: 19.12.2016 KR 20160173632; 25.08.2017 KR 20170107972
(62) Divisional of application: 17883283.8
(71) Applicant: Advanced Technology Inc., Yeonsu-gu Incheon 21999 (KR)
(72) Inventor: CHOI, Byung Chan, 14255 Gyeonggi-do (KR); AN, Doo Baeck, 22002 Incheon (KR)
(74) Representative: Vossius & Partner Patentanwälte Rechtsanwälte mbB

(57) **Abstract**

Disclosed herein is a laser processing apparatus that includes a laser generation unit configured to generate a laser beam to process a workpiece, a first fluid jet generation unit configured to generate and inject a first fluid jet to deliver the laser beam to the workpiece, and a second fluid jet generation unit configured to inject a second fluid jet around the laser beam, wherein the first and second fluid jets are simultaneously or selectively injected.

## Description

### BACKGROUND OF THE INVENTION

### Field of the Invention

Exemplary embodiments of the present invention relate to a laser processing apparatus, and more particularly, to a laser processing apparatus for delivering a laser beam to a workpiece using a water jet.

### Description of the Related Art

With the development of industry, the demand for precision processing increases in different fields. In particular, it is necessary to precisely process main parts in engines for power generation, aircraft engines, turbine engines for industrial equipment, turbine engines for marine vessels, etc. Especially, gas turbines must have improved energy conversion efficiency for high efficiency and high power. To this end, the turbines require materials with high-temperature corrosion resistance and heat resistance. There is an increasing need to precisely process impellers, blisks, and other parts with complicated structure as well as turbine blade cooling holes which are core parts in energy & aerospace industries.

For such precision processing, laser processing techniques have been developed. In a conventional laser processing technique, an optical lens is used to focus laser beams, but the effective working distance thereof is only a few mm due to divergence characteristics of a laser beam. Hence, a workpiece is difficult to be cut when it is thick, and a heat-affected zone is increased when laser power is increased to increase the working distance. In addition, the workpiece is contaminated and substances harmful to human bodies are generated since residues generated during laser processing remain around the machined surface of the workpiece.

To resolve these issues, a new laser processing technique needs to be developed. Particularly, there is a need to develop a laser processing apparatus capable of adjusting an energy distribution profile of laser beams and of selectively using a first fluid jet and a second fluid jet in order to cope with various processing processes.

### [Patent Document]

Korean Utility Model No. 20-0164249 (October 6, 1999)

### SUMMARY OF THE INVENTION

Accordingly, exemplary embodiments of the present invention are to provide a laser processing apparatus capable of selectively using a first fluid jet and a second fluid jet for each process.

In addition, exemplary embodiments of the present invention are to provide a laser processing apparatus capable of increasing a working distance using a water jet.

In addition, exemplary embodiments of the present invention are to provide a laser processing apparatus capable of effectively cooling a machined surface to prevent the machined surface from being heated by a laser beam.

In addition, exemplary embodiments of the present invention are to provide a laser processing apparatus capable of effectively removing impurities generated during processing.

Furthermore, exemplary embodiments of the present invention are to provide a laser processing apparatus capable of performing work with safety even though there is a risk of radiation exposure.

Additional advantages, objects, and features of the invention will be set forth in part in the description which follows and in part will become apparent to those having ordinary skill in the art upon examination of the following or may be learned from practice of the invention.

In accordance with an aspect of the present invention, a laser processing apparatus includes a laser generation unit configured to generate a laser beam to process a workpiece, a first fluid jet generation unit configured to generate and inject a first fluid jet to deliver the laser beam to the workpiece, and a second fluid jet generation unit configured to inject a second fluid jet around the laser beam, wherein the first and second fluid jets are simultaneously or selectively injected.

The first fluid jet may be a liquid, and the second fluid jet may be a gas.

Alternatively, one of the first and second fluid jets may be water, and the other may be a liquid containing water.

The water jet generation unit may include a first fluid chamber configured to accommodate a fluid for generating the water jet, a water supply section configured to supply the fluid to the first fluid chamber, and a nozzle configured to inject the fluid in the first fluid chamber to the workpiece.

The second fluid generation unit may include a second fluid chamber configured to accommodate a second assist fluid, a second fluid supply section configured to supply the second assist fluid to the second fluid chamber, and a second fluid nozzle configured to inject the second assist fluid in the second fluid chamber.

In addition, the fluid forming the first fluid jet may be a first fluid, and the laser processing apparatus may further include an assist injection unit configured to inject a second fluid to the workpiece, separately from the first fluid jet.

The assist injection unit may include a second fluid chamber configured to accommodate the second fluid, a second fluid supply section configured to supply the second fluid to the second fluid chamber, and a second fluid discharge section configured to inject the second fluid to the workpiece.

The second fluid may include one of deionized water, alcohol, etchant, and city water.

The first fluid and the second fluid may be equal to each other.

Alternatively, the first fluid and the second fluid may be different from each other.

The workpiece may be positioned in the water.

The second fluid jet may consist of a plurality of second fluid jets to respectively inject a liquid and a gas, and the liquid and the gas may be selectively injected.

The liquid containing water may be a liquid obtained by mixing alcohol with water.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view illustrating a laser processing apparatus according to an embodiment of the present invention;
Fig. 2 is a view illustrating a generated water jet according to the embodiment of the present invention;
Fig. 3 is a view for explaining beam mode control of a laser processing apparatus according to another embodiment of the present invention; and
Fig. 4 is a view illustrating a laser processing apparatus according to a further embodiment of the present invention.

### DETAILED DESCRIPTION OF EMBODIMENTS

Exemplary embodiments of the present invention will be described below in more detail with reference to the accompanying drawings. The present invention may, however, be embodied in different forms and should not be construed as limited to the embodiments set forth herein.

In certain embodiments, detailed descriptions of device constructions or processes well known in the art may be omitted to avoid obscuring appreciation of the disclosure by a person of ordinary skill in the art. In addition, the terms used in the specification are terms defined in consideration of functions of the present invention, and these terms may vary with the intention or practice of a user or an operator. Therefore, these terms should be defined based on the entire content disclosed herein.

The present disclosure is defined only by the categories of the claims. These embodiments are provided so that this disclosure will be thorough and complete, and will fully convey the scope of the disclosure to those skilled in the art.

Prior to description of exemplary embodiments with reference to the accompanying drawings, the present invention will be described in brief. The present invention is characterized in that laser processing can be assisted by a fluid for laser guidance and a fluid injected around the fluid. The present invention will be described below on the premise that the fluid for laser guidance refers to a first fluid and the fluid injection around the first fluid refers to a second fluid.

In addition, the present invention will described below by way of two primary examples: one is when the second fluid is a gas phase and the other is when it is a liquid phase. The second fluid may be the same liquid as the first fluid when the second fluid is the liquid phase, or the second fluid may be a different fluid. For example, the first fluid may be water and the second fluid may be a liquid mixed with an alcohol series.

That is, this means that the first fluid is positioned at the core and the second fluid surrounds the first fluid in a ring form. It is possible to adjust an angle (refractive index) formed in the fluid when the laser beam is guided, by controlling the temperature and injection pressure of each fluid with a control unit as well as by injecting the same fluid or the different fluids as described above. In other words, it is possible to adjust a numerical aperture (NA). Thus, the numerical aperture (NA) may be set differently according to the angle of the tapered shape processed on a base metal (workpiece).

Here, the numerical aperture (hereinafter, referred to as "NA") is a numerical value for determining an angle of incidence affecting laser propagation in the fluid (stream of water), and has to be determined within a range in which total reflection is possible. Accordingly, the refractive index of the fluid may be changed also in connection with properties (viscosity, etc.) varied depending on the type of the fluid as well as the temperature and injection pressure of the fluid as described above, thereby enabling the NA to be adjusted.

In this case, when the angle of incidence of the laser beam is attained in a wider range according to the type, temperature, and injection pressure of the fluid, a degree of freedom of design is increased. Therefore, it is possible to more advantageously obtain the degree of freedom of design or the like by controlling fluid information (type, temperature, and injection pressure) between media (e.g., between the first fluid and the second fluid, between the first fluid and the injected fluid, or the like) through which the laser beam can pass.

In addition, the second fluid may be injected toward the base metal as the above-mentioned gas or liquid phase in a fixed or selective manner.

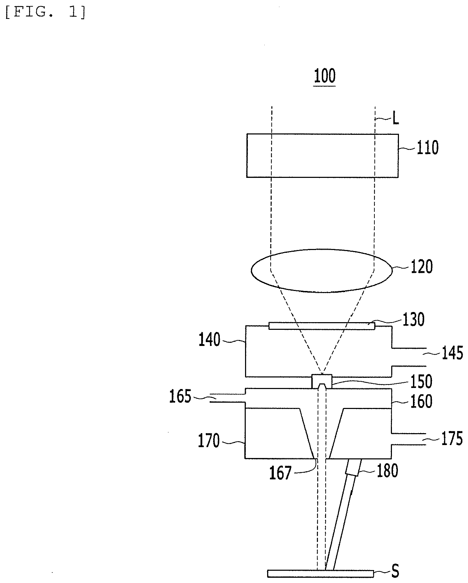

Fig. 1 is a view illustrating a laser processing apparatus 100 according to an embodiment of the present invention.

Referring to Fig. 1, the laser processing apparatus 100 may include a laser generation unit that generates a laser beam L to process a workpiece S, and a first fluid jet generation unit that generates a first fluid jet to deliver the laser beam L to the workpiece S. The laser generation unit may include a collimator 110 that collimates the laser beam, and a focus lens 120 that forms a focal point of the laser beam. The laser beam, which has passed through the collimator 110 and the focus lens 120, may pass through the first fluid jet generation unit via a window 130. The first fluid jet generation unit is an illustrative component for generating the first fluid jet, and may include a first fluid chamber 140 that accommodates a fluid such as water therein, a water supply section 145 that supplies the fluid to the first fluid chamber 140, and a nozzle 150 that injects the fluid in the first fluid chamber to the workpiece S.

The laser beam may be delivered at a long distance without divergence by the first fluid jet, thereby increasing a working distance. In addition, the first fluid jet may serve to effectively cool the machined surface of the workpiece S heated by the laser beam, with the consequence that it is possible to prevent the physical or thermal damage of a material and improve a processing quality. Thus, since post-treatment such as slaging or grinding is not required, it is possible to save cost and time. In addition, the first fluid jet may function as corrosion inhibition by washing impurities generated during processing.

The window 130 may be made of a material such as sapphire, and the nozzle 150 may be made of a material such as sapphire or diamond. One end (omitted in the drawing) of the water supply section 145 may be connected to a pump (not shown), and the fluid may be supplied to the first fluid chamber 140 by the pressure of the pump. The fluid supplied to the first fluid chamber 140 may be water. In this case, since the water jet through which the laser beam L passes is formed in the first fluid chamber 140, the fluid (e.g., water) supplied to the first fluid chamber 140 preferably has high purity. If an impurity is contained in the water, the laser beam L passing through the water may be adversely affected by reaction with the impurity.

The laser beam L having passed through the nozzle 150 may pass through a second fluid jet generation unit. The second fluid jet generation unit may include a second fluid chamber 160 that accommodates a second fluid containing assist gas such as helium (He) therein, a second fluid supply section 165 that supplies the second fluid to the second fluid chamber 160, and a nozzle 167 that injects the second fluid in the second fluid chamber 160. The second fluid may serve to suppress turbulence, which is generated when the first fluid is initially generated, by the injection pressure of the second fluid, to cool heat generated in the workpiece S by laser processing using the laser beam L, and to adjust a working piece by adjusting the length of the laser water jet. By injection of other inert gases as well as helium to the workpiece S, it is possible to suppress oxidation from occurring in the vicinity of the machined portion of the workpiece S due to heat generated by the laser processing unit.

Here, the first fluid jet generated by the first fluid jet generation unit and the second fluid jet generated by the second fluid jet generation unit may be simultaneously injected so that the second fluid jet is positioned around the first fluid jet and the laser beam L is delivered to the workpiece S. Alternatively, a selected one of the first fluid jet and the second fluid jet may be injected to deliver the laser beam L to the workpiece S. This is to perform laser processing in a proper manner according to the purpose of processing or the type of the workpiece S.

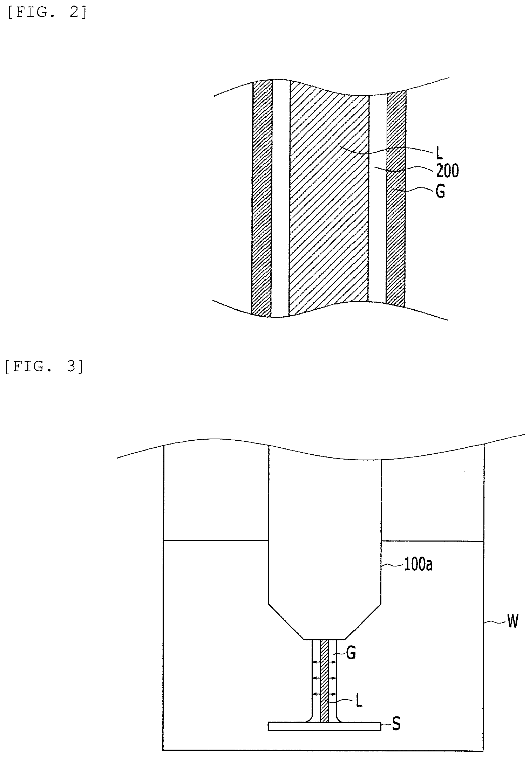

Fig. 2 is a view illustrating a state in which a second fluid applies a pressure in the vicinity of a first fluid jet 200 according to the embodiment of the present invention.

The turbulence generated in the first fluid jet 200 may be suppressed by the second fluid. Therefore, the retention length of the first fluid jet 200 may be increased and the processing length of the laser beam L may thus be increased. Thus, it is possible to properly process the workpiece even though the thickness of the workpiece is increased. In addition, the temperature gradient of the surface of the workpiece, which is generated by the first fluid jet 200, may be alleviated by the assist gas G as the second fluid in the present embodiment. Since the first fluid jet 200 is thin, the surface of the workpiece may be cooled in a small range. For this reason, the temperature gradient between a portion cooled by the first fluid jet and a portion around the above portion may be generated. However, the temperature gradient of the surface of the workpiece may be alleviated since the assist gas G cools the periphery of the portion cooled by the first fluid jet 200. Thus, it is possible to prevent damage such as cracks which are likely to occur in the material such as a silicon wafer having high brittleness. Ultimately, it is possible to improve a processing quality.

Referring to Fig. 1 again, the laser processing apparatus 100 may further include an assist injection unit that injects an assist fluid to the workpiece S, separately from the fluid for generating the first fluid jet 200. The assist injection unit may include an assist fluid chamber 170 that accommodates an assist fluid therein, an assist fluid supply section 175 that supplies the assist fluid to the assist fluid chamber 170, and an assist fluid discharge section 180 that injects the assist fluid to the workpiece S. The assist fluid injected to the workpiece S by the assist fluid discharge section 180 may perform various roles such as removal of processing by-products generated in the workpiece S or modification of the surface of the workpiece S.

The assist fluid may be selected from, for example, deionized water, etchant, and city water. The selection of the assist fluid may be performed according to the purpose of processing.

The deionized water is ultrapure water and is not affected by heat generated by the laser beam or the like. Therefore, the deionized water may be advantageously used to cool the workpiece and may be easily used to remove by-products generated in the workpiece.

Since the etchant is used independently of or in combination with the laser beam, the etchant may serve to assist laser processing. For example, the etchant may modify the surface of the workpiece to create a synergy effect with laser processing or may be applied to the surface of the workpiece for easier processing in drilling or the like.

The city water may be used to reduce costs when there is no need for precision processing conditions and to remove by-products generated in the workpiece.

Here, assuming that the fluid forming the first fluid jet 200 is a first fluid, the first fluid may be equal to or different from the assist fluid. If the first fluid is equal to the assist fluid, they may be respectively supplied to the first fluid supply section 145 and the assist fluid supply section 175 by the same pump (not shown). However, the present invention is not limited thereto, and different pumps may be used even when the first fluid is equal to the assist fluid. If the first fluid is different from the assist fluid, individual pumps are preferably used for them.

Fig. 3 is a view for explaining a processing method by a laser processing apparatus 100a according to another embodiment of the present invention.

Referring to Fig. 3, the laser processing apparatus 100a may perform laser processing on a workpiece S in the water W. Since the first fluid jet of the laser processing apparatus 100a is injected at high pressure, the first fluid jet may reach the workpiece S even in the water W. Thus, a laser beam L may be delivered to the workpiece S along the first fluid jet and the workpiece S may be processed even in the water W.

This may be used when the workpiece S at risk of radiation exposure has to be processed as well as when the workpiece S has to be inevitably processed in the water because it is positioned already in the water. Water may block radioactive substances. Accordingly, when laser processing is performed on the workpiece S at risk of radiation exposure in the state in which the workpiece S is positioned in the water, the laser processing can be performed with safety since radiation is blocked by the water without emission out of the water.

By simultaneous injection of first and second fluids in the present embodiment, a void from the laser processing apparatus 100a to the workpiece S may also be formed in the water W by the pressure of the second fluid. Accordingly, the laser processing may be more smoothly performed on the workpiece S using the second fluid.

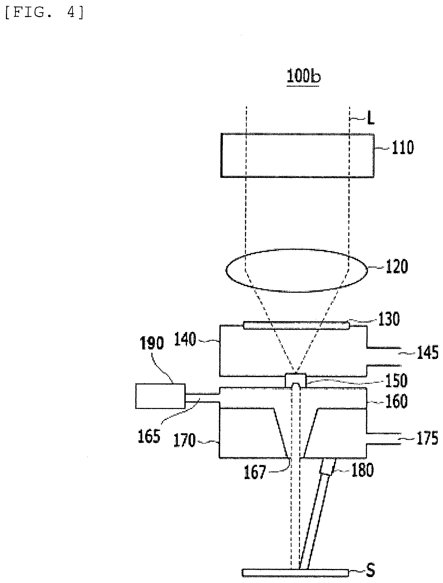

Fig. 4 is a view illustrating a laser processing apparatus 100b according to a further embodiment of the present invention.

The embodiment of the present invention illustrated in Fig. 4 differs from that illustrated in Fig. 1, and illustrates the case where the second fluid is a liquid. As described above, in this case, the first and second fluids may be the same liquid or different liquids. By way of example, the first fluid positioned at the core of a water column may be water and the second fluid may be a liquid obtained by mixing water with an alcohol series (containing ethanol).

When the first and second fluids are different fluids, the refractive index of a laser beam L may be changed depending on the viscosity of each fluid. In addition, it is possible to control the refractive index in a different manner according to the injection pressure and temperature of the fluid. This process may be controlled by a control unit 190 connected to a chamber 160 or 140. Since one or more of the injection pressure and temperature of the second fluid are controlled in the present embodiment, the control unit 190 connected to the second fluid chamber 160 is illustrated.

That is, when the control unit 190 is connected to the first fluid chamber 140, the control unit 190 may control one or more of the injection pressure and temperature of the first fluid. On the other hand, when the control unit 190 is connected to each of the chambers 140 and 160, the control unit 190 may control the injection pressure and temperature of one or more of the first and second fluids. To this end, the control unit 190 may include or be connected to a pump (not shown), a cooling and heating means (not shown), and a sensor (not shown) for detecting pressure or temperature. Moreover, the fluid (e.g., helium gas) accommodated in an assist fluid chamber 170 may be additionally injected to a workpiece S through an assist fluid discharge section.

As is apparent from the above description, the exemplary embodiments of the present invention can provide a laser processing apparatus capable of changing the mode of a laser beam delivered to a workpiece in various manners by adjusting at least one of the offset and deflection of a laser water jet.

In accordance with the laser processing apparatus of the exemplary embodiments of the present invention, it is possible to increase a working distance for the workpiece using the water jet.

In accordance with the laser processing apparatus of the exemplary embodiments of the present invention, it is possible to effectively cool a machined surface heated by the laser beam using the water jet.

In accordance with the laser processing apparatus of the exemplary embodiments of the present invention, it is possible to effectively remove impurities generated during processing by means of the water jet.

In accordance with the laser processing apparatus of the exemplary embodiments of the present invention, it is possible to perform laser processing on the workpiece with safety in the state in which the workpiece is positioned in the water even though there is a risk of radiation exposure.

Although the present invention has been described with respect to the illustrative embodiments, it will be apparent to those skilled in the art that various variations and modifications may be made without departing from the scope of the invention as defined in the following claims.
The present invention further relates to the following items:
1. A laser processing apparatus comprising:
   a laser generation unit configured to generate a laser beam to process a workpiece;
   a first fluid jet generation unit configured to generate and inject a first fluid jet to deliver the laser beam to the workpiece; and
   a second fluid jet generation unit configured to inject a second fluid jet around the laser beam,
   wherein the first and second fluid jets are simultaneously or selectively injected.
2. The laser processing apparatus according to item 1, wherein the first fluid jet is a liquid, and the second fluid jet is a gas.
3. The laser processing apparatus according to item 1, wherein one of the first and second fluid jets is water, and the other is a liquid containing water.
4. The laser processing apparatus according to item 1, wherein the first fluid jet generation unit comprises:
   a first fluid chamber configured to accommodate a first fluid for generating the first fluid jet;
   a water supply section configured to supply the first fluid to the first fluid chamber; and
   a nozzle configured to inject the first fluid in the first fluid chamber to the workpiece.
5. The laser processing apparatus according to item 1, wherein the second fluid jet generation unit comprises:
   a second fluid chamber configured to accommodate a second fluid;
   a second fluid supply section configured to supply the second fluid to the second fluid chamber; and
   a second fluid nozzle configured to inject the second fluid in the second fluid chamber.
6. The laser processing apparatus according to item 1, wherein:
   a fluid forming the first fluid jet is a first fluid; and
   the laser processing apparatus further comprises an injection unit configured to inject an assist fluid to the workpiece, separately from the first fluid jet.
7. The laser processing apparatus according to item 6, wherein the injection unit comprises:
   an assist fluid chamber configured to accommodate the assist fluid;
   an assist fluid supply section configured to supply the assist fluid to the assist fluid chamber; and
   an assist fluid discharge section configured to inject the assist fluid to the workpiece.
8. The laser processing apparatus according to item 6, wherein the second fluid comprises one of deionized water, etchant, alcohol, and city water.
9. The laser processing apparatus according to item 6, wherein the first fluid and the assist fluid are the same fluid.
10. The laser processing apparatus according to item 6, wherein the first fluid and the assist fluid are different fluids.
11. The laser processing apparatus according to item 1, wherein the workpiece is positioned in the water.
12. The laser processing apparatus according to item 1, wherein the second fluid jet consists of a plurality of second fluid jets to respectively inject a liquid and a gas, and the liquid and the gas are selectively injected.
13. The laser processing apparatus according to item 3, wherein the liquid containing water is a liquid obtained by mixing alcohol with water.

## Claims

1. A laser processing apparatus, comprising:
a laser generation unit configured to generate a laser beam to process a workpiece;
a first fluid jet generation unit configured to generate and inject a first fluid jet into a first fluid to deliver the laser to the workpiece;
a second fluid jet generation unit configured to inject a second fluid jet to a second fluid around the laser beam; and
an assist injection unit configured to inject an assist fluid to the workpiece,
wherein the first fluid of the first fluid jet and the assist fluid of the assist injection unit are supplied by a same pump, respectively, as a same fluid.

2. The laser processing apparatus according to claim 1, wherein the first fluid jet is a liquid, and the second fluid jet is a gas.

3. The laser processing apparatus according to claim 1, wherein one of the first and second fluid jets is water, and the other is a liquid containing water.

4. The laser processing apparatus according to claim 3, wherein the liquid containing water is a liquid obtained by mixing alcohol with water.

5. The laser processing apparatus according to any one of claims 1 to 4, wherein the first fluid jet generation unit comprises:
a first fluid chamber configured to accommodate a first fluid for generating the first fluid jet;
a water supply section configured to supply the first fluid to the first fluid chamber; and
a nozzle configured to inject the first fluid in the first fluid chamber to the workpiece.

6. The laser processing apparatus according to any one of claims 1 to 5, wherein the second fluid jet generation unit comprises:
a second fluid chamber configured to accommodate the second fluid;
a second fluid supply section configured to supply the second fluid to the second fluid chamber; and
a nozzle configured to inject the second fluid in the second fluid chamber.

7. The laser processing apparatus according to claim 1, wherein the second fluid jet is positioned around the first fluid jet to inject the laser to the workpiece.

8. The laser processing apparatus according to claim 7, wherein the assist injection unit comprises:
an assist fluid chamber configured to accommodate the assist fluid;
an assist fluid supply section configured to supply the assist fluid to the assist fluid chamber; and
an assist fluid discharge section configured to inject the assist fluid to the workpiece.

9. The laser processing apparatus according to claim 7 or 8, wherein the second fluid and/or the assist fluid comprises one of deionized water, etchant, alcohol, and city water.

10. The laser processing apparatus according to any one of claims 7 to 9, wherein the first fluid and the assist fluid are a same fluid.

11. The laser processing apparatus according to any one of claims 7 to 9, wherein the first fluid and the assist fluid are different fluids.

12. The laser processing apparatus according to any one of claims 1 to 11, wherein the workpiece is positioned in water.

13. The laser processing apparatus according to any one of claims 1 to 12, wherein the second fluid jet consists of a plurality of second fluid jets to respectively inject a liquid and a gas, and one of the liquid and the gas is selectively injected.
